# EUROPÄISCHE PATENTSCHRIFT

(11) **EP 3 556 210 B1**
(45) Veröffentlichungstag und Bekanntmachung des Hinweises auf die Patenterteilung: **23.08.2023**
(21) Anmeldenummer: 19401015.3
(22) Anmeldetag: 11.04.2019
(51) Int. Cl.: A01M 7/00

(54) **LANDWIRTSCHAFTLICHES GERÄT MIT EINER STEUERUNGSEINRICHTUNG UND VERFAHREN**
AGRICULTURAL DEVICE WITH CONTROL DEVICE AND METHOD
APPAREIL AGRICOLE AVEC UN DISPOSITIF DE COMMANDE ET PROCÉDÉ

(30) Priorität: 20.04.2018 DE 102018109500
(43) Veröffentlichungstag der Anmeldung: 23.10.2019
(73) Patentinhaber: Amazonen-Werke H. Dreyer SE & Co. KG, 49205 Hasbergen (DE)
(72) Erfinder: Trentmann, Markus, 49134 Wallenhorst (DE)

(56) Entgegenhaltungen:
- EP-A1- 2 586 304
- EP-A2- 2 630 856
- WO-A1-96/02817
- DE-A1-102008 005 191
- DE-B3-102008 009 753

## Beschreibung

Die Erfindung betrifft ein landwirtschaftliches Gerät nach dem Oberbegriff des Patentanspruchs 1, und ein Verfahren zum Ausbringen von Material nach dem Oberbegriff des Patentanspruchs 9.

Beim Ausbringen von Material, wie etwa Düngemittel, Pflanzenschutzmittel oder Saatgut, auf eine landwirtschaftliche Nutzfläche ist sowohl die Höhenführung einer die Ausbringelemente tragenden Struktur des landwirtschaftlichen Ausbringgeräts als auch die Steuerung der Ausbringmenge von besonderer Bedeutung, um einen möglichst hohen Ertrag bei gleichzeitig geringem Materialaufwand erreichen zu können.

Hinsichtlich der Höhenführung ist eine möglichst präzise Erfassung der Ausrichtung der die Ausbringelemente tragenden Struktur gegenüber dem Ackerboden notwendig, um beispielsweise Vertikalschwingungen der die Ausbringelemente tragenden Struktur verhindern oder zumindest verringern zu können. Hinsichtlich der Steuerung der Ausbringmenge ist die Kenntnis des Vitalitätszustands der Pflanzen von besonderer Relevanz, damit eine lokale und bedarfsgerechte Materialabgabe erfolgen kann, wenn ein nicht-optimaler Vitalitätszustand bei einer Pflanze festgestellt wird. Außerdem kann die Steuerung der Ausbringmenge auch derart erfolgen, dass durch die Ausbringung eines geeigneten Materials schädlicher Bewuchs, wie etwa Wildbewuchs, bekämpft wird.

Im Stand der Technik sind Sensoren bekannt, mit welchen der Abstand zu einem Bezugsobjekt ermittelt werden kann. Sensoren dieser Art sind beispielsweise in der DE 10 2008 009 753 B3, der EP 2 586 304 A1 und der EP 2 630 856 A2 offenbart. Derartige Sensoren lassen sich grundsätzlich auch bei der Höhenführung einer die Ausbringelemente tragenden Struktur eines landwirtschaftlichen Geräts einsetzen. Außerdem sind Sensoren bekannt, mittels welchen die Reflexionseigenschaften von Pflanzen erfassbar sind, sodass auf Grundlage der Reflexionseigenschaften Pflanzeneigenschaften und/oder Pflanzenzustände abgeleitet werden können.

Das Ausstatten eines landwirtschaftlichen Geräts mit entsprechenden Sensoren bedingt jedoch einen hohen Kostenaufwand, da zur Abstandserfassung und zur Vitalitätserfassung unterschiedliche Sensortypen einzusetzen sind, wie es beispielsweise in der DE 10 2008 005 191 A1 offenbart ist. Dies führt zu einer Steigerung der Gesamtkosten entsprechender landwirtschaftlicher Geräte.

Zusätzlich sind aus der WO 96/02817 A1 sehr aufwändige Sensoren bekannt, die Abstände über die Triangulationsmethode bestimmen. Gleichzeitig können Reflexionseigenschaften von abgetasteten Objekten über den Vergleich von Reflektivitäten zweier Wellenlängen ermittelt werden. Diese Sensoren sind somit sehr komplex und anfällig gegenüber den im landwirtschaftlichen Umfeld auftretenden Erschütterungen.

Die der Erfindung zugrundeliegende Aufgabe besteht somit darin, einem landwirtschaftlichen Gerät die Abstandserfassung und die Pflanzenzustandserfassung zu ermöglichen, ohne dabei die Produktionskosten und/oder die Systemkomplexität des landwirtschaftlichen Geräts wesentlich zu steigern.

Die Aufgabe wird gelöst durch die kennzeichnenden Merkmale des Anspruchs 1.

Die Erfindung macht sich die Erkenntnis zunutze, dass bereits existierende Sensortypen zum Erfassen eines Abstands zu einem Bezugsobjekt als auch zum Erfassen von Reflexionseigenschaften des Bezugsobjekts eingesetzt werden können. Die Notwendigkeit, separate Sensortypen zur Abstandserfassung und zur Erfassung der Reflexionseigenschaften einzusetzen, wird somit überwunden. Die Bezugsobjekte für die jeweiligen Sensoren sind dabei vorzugsweise Pflanzen oder der Ackerboden. Durch eine Abstandserfassung an einer oder mehreren Positionen kann die Ausrichtung und/oder der Abstand einer die Ausbringelemente tragenden Struktur erfasst werden, sodass eine Höhenführung der Struktur umgesetzt werden kann. Die Ausbringelemente können beispielsweise als Spritzdüsen ausgebildet sein, wobei die die Ausbringelemente tragende Struktur beispielsweise als Spritzgestänge ausgebildet sein kann. Der eine oder die mehreren Sensoren sind vorzugsweise an dem Spritzgestänge angeordnet und/oder befestigt. Mittels der Sensoren können gleichzeitig die Reflexionseigenschaften von Pflanzen auf dem Ackerboden erfasst werden. Bei der Ausbringung von Flüssigdünger kann somit gezielt lokal Flüssigdünger auf Pflanzen abgegeben werden, deren Reflexionseigenschaften auf einen nicht-optimalen Gesundheitszustand schließen lassen. Bei der Ausbringung von Pflanzenschutzmitteln kann eine gezielte lokale Ausbringung auf unerwünschte Pflanzen, wie etwa Wildpflanzen, erfolgen, welche aufgrund ihrer Reflexionseigenschaften identifiziert worden sind.

Erfindungsgemäß weist die Steuerungseinrichtung eine Auswerteeinrichtung auf, welche signalleitend mit dem einen oder den mehreren Sensoren verbunden und dazu eingerichtet ist, aus den Sensordaten der jeweiligen Sensoren den Abstand der jeweiligen Sensoren zu dem jeweiligen Bezugsobjekt und die Reflexionseigenschaften des jeweiligen Bezugsobjekts zu ermitteln. Die Auswerteeinrichtung kann dazu eingerichtet sein, die Sensordaten des einen oder der mehreren Sensoren auf einem internen Speicher zu speichern und/oder zur Speicherung auf einem externen Speicher zu versenden. Vorzugsweise sind mehrere Sensoren beabstandet voneinander an einer Trägerstruktur für die Ausbringelemente eines landwirtschaftlichen Geräts angeordnet, sodass über die Abstandswerte die Position und/oder Ausrichtung der Trägerstruktur durch die Auswerteeinrichtung ermittelt werden kann. Vorzugsweise sind die mehreren Sensoren derart voneinander beabstandet, dass Bezugsobjekte über die gesamte Arbeitsbreite des landwirtschaftlichen Geräts erfassbar sind. Somit wird vermieden, dass einzelne zu behandelnde Pflanzen während des Ausbringvorgangs nicht erfasst werden.

In einer Weiterbildung der erfindungsgemäßen Steuerungseinrichtung ist die Auswerteeinrichtung dazu eingerichtet, auf Grundlage der ermittelten Reflexionseigenschaften die Chlorophyllaktivität und/oder den Chlorophyllzustand des Bezugsobjekts zu ermitteln. Der Chlorophyllzustand des Bezugsobjekts kann dabei beispielsweise den Chlorophyllgehalt des Bezugsobjekts betreffen. Das Ermitteln der Chlorophyllaktivität und/oder des Chlorophyllzustands des Bezugsobjekts erfolgt vorzugsweise über eine oder mehrere Funktionen und/oder über eine oder mehrere Kalibrierkurven. Die eine oder die mehreren Funktionen und/oder die eine oder die mehreren Kalibrierkurven definieren vorzugsweise einen Zusammenhang zwischen den erfassten Reflexionseigenschaften des Bezugsobjekts und der Chlorophyllaktivität und/oder dem Chlorophyllzustand des Bezugsobjekts.

Erfindungsgemäß ist eine Steuerungseinrichtung vorgesehen, bei welcher die Auswerteeinrichtung dazu eingerichtet ist, auf Grundlage der ermittelten Reflexionseigenschaften den Vitalitätszustand des Bezugsobjekts zu bestimmen. Vorzugsweise ist das Bezugsobjekt eine Pflanze, sodass die Auswerteeinrichtung dazu eingerichtet ist, auf Grundlage der ermittelten Reflexionseigenschaften den Pflanzenzustand zu erfassen. Insbesondere ist die Auswerteeinrichtung dazu eingerichtet, auf Grundlage der ermittelten Reflexionseigenschaften die Pflanzenart und/oder den Pflanzentyp der erfassten Pflanze zu bestimmen. Vorzugsweise ist die Auswerteinrichtung dazu eingerichtet, aus den Sensordaten der jeweiligen Sensoren die Höhe oder andere geometrische Eigenschaften des jeweiligen Bezugsobjekts zu ermitteln. Das Ermitteln der Höhe eines Bezugsobjekts kann über mehrere Abstandserfassungsvorgänge erfolgen, wobei der Abstand zu dem in Frage stehenden Bezugsobjekt mit dem Abstand zu einem als Ackerboden identifizieren Bezugsobjekt verglichen wird. Das Bestimmen des Vitalitätszustands des Bezugsobjekts erfolgt vorzugsweise über eine oder mehrere Funktionen und/oder über eine oder mehrere Kalibrierkurven. Die eine oder die mehreren Funktionen und/oder die eine oder die mehreren Kalibrierkurven definieren vorzugsweise einen Zusammenhang zwischen den erfassten Reflexionseigenschaften und/oder der erfassten Höhe des Bezugsobjekts und dem Zustand, insbesondere dem Vitalitätszustand, des Bezugsobjekts. Wenn das Bezugsobjekt eine Pflanze ist, betrifft die Höhe des Bezugsobjekts die Pflanzenhöhe. Die Pflanzenhöhe ist ebenso wie der Chlorophyllgehalt und die Färbung einer Pflanze ein charakteristisches Vitalitätsmerkmal, aus welchem der Gesundheitszustand einer Pflanze ableitbar ist. Ferner kann die Auswerteinrichtung dazu eingerichtet sein, aus den Sensordaten der jeweiligen Sensoren die Dichte eines Pflanzenbestandes zu ermitteln.

Erfindungsgemäß ist eine Steuerungseinrichtung vorgesehen, bei welcher der eine oder die mehreren Sensoren jeweils dazu eingerichtet sind, einen oder mehrere elektromagnetische Wellen auszusenden und die Laufzeit und/oder die Intensität der einen oder der mehreren an dem Bezugsobjekt reflektierten elektromagnetischen Wellen zu erfassen. Vorzugsweise bildet die eine oder bilden die mehreren elektromagnetischen Wellen einen Lichtstrahl aus. Über die Laufzeit der einen oder der mehreren an dem Bezugsobjekt reflektierten elektromagnetischen Wellen lässt sich unter Berücksichtigung der Ausbreitungsgeschwindigkeit der elektromagnetischen Wellen der Abstand zu dem Bezugsobjekt ermitteln. Über die Intensität der einen oder der mehreren an dem Bezugsobjekt reflektierten elektromagnetischen Wellen lassen sich die Reflexionseigenschaften des Bezugsobjekts erfassen.

In einer Weiterbildung der erfindungsgemäßen Steuerungseinrichtung umfasst der eine oder umfassen die mehreren Sensoren jeweils eine oder mehrere Sendeeinheiten, insbesondere LED-Sendeeinheiten und/oder Laser-Sendeeinheiten, welche jeweils dazu eingerichtet sind, ein einen Impuls aufweisendes und/oder in der Intensität schwankendes Sendesignal auszusenden. Vorzugsweise sind die mehreren Sendeeinheiten nebeneinander angeordnet, sodass eine mehrdimensionale, insbesondere zweidimensionale oder dreidimensionale Abstandserfassung über mehrere Einzelmessungen erfolgen kann. Vorzugsweise umfasst der eine oder umfassen die mehreren Sensoren jeweils eine Empfängereinheit, welche dazu eingerichtet ist, ein einen Impuls aufweisendes Empfangssignal und/oder ein in der Intensität schwankendes Empfangssignal zu empfangen. Vorzugsweise umfasst der eine oder umfassen die mehreren Sensoren und/oder die Auswerteeinrichtung jeweils eine Messeinheit, welche dazu eingerichtet ist, ausgesendete und empfangene Impulse und/oder ausgesendete und empfangene Signale einander zuzuordnen und vorzugsweise aus dem Sendezeitpunkt und dem Empfangszeitpunkt einander zugeordneter Impulse und/oder Signale die Laufzeit und/oder die Intensitätsänderung der einen oder der mehreren reflektierten elektromagnetischen Wellen zu ermitteln.

Außerdem ist eine erfindungsgemäße Steuerungseinrichtung vorteilhaft, bei welcher die eine oder die mehreren ausgesendeten elektromagnetischen Wellen Lichtwellen aus dem nahen Infrarotbereich umfassen. Nahes Infrarot (NIR) ist der Bereich des elektromagnetischen Spektrums, welcher sich in Richtung größerer Wellenlänge an das sichtbare Licht anschließt. Lichtwellen aus dem nahen Infrarotbereich sind besonders geeignet, um den Chlorophyllzustand von Pflanzen zu erfassen.

In einer anderen Ausführungsform der erfindungsgemäßen Steuerungseinrichtung weist die eine oder weisen die mehreren ausgesendeten elektromagnetischen Wellen eine Wellenlänge in dem Bereich von 0,7 µm bis 1,3 µm, vorzugsweise eine Wellenlänge im Bereich von 780 nm bis 900 nm auf. Insbesondere ist die Auswerteeinrichtung dazu eingerichtet, reflektierte elektromagnetische Wellen aus dem nahen Infrarotbereich, insbesondere mit einer Wellenlänge in dem Bereich von 0,7 µm bis 1,3 µm, besonders bevorzugt mit einer Wellenlänge im Bereich von 780 nm bis 900 nm, zur Ermittlung der Reflexionseigenschaften des Bezugsobjekts auszuwerten.

Die Steuerungseinrichtung des erfindungsgemäßen landwirtschaftlichen Geräts ist nach einer der vorstehend beschriebenen Ausführungsformen ausgebildet. Hinsichtlich der Vorteile und Modifikationen des erfindungsgemäßen landwirtschaftlichen Geräts wird zunächst auf die Vorteile und Modifikationen der erfindungsgemäßen Steuerungseinrichtung verwiesen.

In einer bevorzugten Ausführungsform des erfindungsgemäßen landwirtschaftlichen Geräts weist dieses ein Spritzgestänge auf, an welchem mehrere Ausbringelemente zum Ausbringen des als Spritzflüssigkeit ausgebildeten Materials angeordnet sind, wobei der eine oder die mehreren Sensoren der Steuerungseinrichtung ebenfalls an dem Spritzgestänge angeordnet sind. Das landwirtschaftliche Gerät kann beispielsweise eine Feldspritze, insbesondere eine Anbauspritze, eine Aufbauspritze, eine Anhängespritze oder eine selbstfahrende Spritze sein. Die Ausbringelemente können beispielsweise als Spritzdüsen ausgebildet sein.

In einer weiteren Ausführungsform des erfindungsgemäßen landwirtschaftlichen Geräts ist die Steuerungseinrichtung dazu eingerichtet, die Sensordaten des einen oder der mehreren Sensoren zur Höhenführung des Spritzgestänges und/oder zur Schwingungsreduktion an dem Spritzgestänge zu verwenden. Über die Sensordaten des einen oder der mehreren Sensoren kann der Abstand des Spritzgestänges zu dem Ackerboden an mehreren Positionen bestimmt werden, sodass auch die Ausrichtung des Spritzgestänges gegenüber dem Ackerboden ermittelt werden kann. Über die Sensordaten kann die Neigung des Spritzgestänges derart gesteuert werden, dass das Spritzgestänge stets parallel zu dem Ackerboden ausgerichtet ist. Ferner können Vertikalschwingungen auf Grundlage der Sensordaten erfasst werden, sodass die Schwingungen an dem Spritzgestänge mittels geeigneter Gegenimpulse eliminiert oder zumindest verringert werden können.

Erfindungsgemäß ist ein landwirtschaftliches Gerät vorgesehen, bei welchem die Steuerungseinrichtung dazu eingerichtet ist, die Sensordaten des einen oder der mehreren Sensoren zur Steuerung der Ausbringmenge zu verwenden. Wenn die Auswerteeinrichtung der Steuerungseinrichtung auf Grundlage der Sensordaten eine Pflanze mit einem nicht-optimalen Vitalitätszustand erfasst, kann über die Steuerung der Ausbringmenge eine lokale Ausbringung von Pflanzenschutzmittel oder Flüssigdünger im Bereich der erfassten Pflanze erfolgen. Ferner kann die Menge an ausgebrachtem Düngemittel und/oder an ausgebrachtem Pflanzenschutzmittel temporär lokal gesteigert werden, um unerwünschte Pflanzen zu bekämpfen oder Pflanzen mit einem nicht-optimalen Gesundheitszustand zu unterstützen.

In einer anderen Ausführungsform des erfindungsgemäßen landwirtschaftlichen Geräts ist die Steuerungseinrichtung dazu eingerichtet, die Ausbringmenge mittels Pulsweitenmodulation oder Pulsweitenfrequenzmodulation an den Ausbringelementen oder den Ausbringelementen vorgeschalteten Ventileinheiten zu steuern. Über die Pulsweitenmodulation oder Pulsweitenfrequenzmodulation lassen sich Ausbringmengen äußerst präzise einstellen, ohne dass hierfür der Bereitstellungsdruck der auszubringenden Flüssigkeit zu variieren ist. Eine Einstellung des Bereitstellungsdrucks der auszubringenden Flüssigkeit kann jedoch zusätzlich zu der Pulsweitenmodulation oder der Pulsweitenfrequenzmodulation an den Ausbringelementen oder den Ausbringelementen vorgeschalteten Ventileinheiten erfolgen.

Ferner ist ein erfindungsgemäßes landwirtschaftliches Gerät vorteilhaft, bei welchem die Steuerungseinrichtung dazu eingerichtet ist, die Sensordaten des einen oder der mehreren Sensoren zur Erstellung einer Applikationskarte zu verwenden und/oder zur Erstellung einer Applikationskarte an ein externes Gerät zu versenden. Die Sensordaten des einen oder der mehreren Sensoren können auch zu anderen Zwecken an ein externes Gerät versendet werden. Insbesondere können die Sensordaten des einen oder der mehreren Sensoren einem Farm-Management-System bereitgestellt werden, mittels welchem ein Landwirt seine landwirtschaftlichen Flächen verwalten kann.

Die der Erfindung zugrundeliegende Aufgabe wird ferner durch ein Verfahren nach den kennzeichnenden Merkmalen des Anspruches 9 gelöst. Hinsichtlich der Vorteile und Modifikationen des erfindungsgemäßen Verfahrens wird zunächst auf die Vorteile und Modifikationen der erfindungsgemäßen Steuerungseinrichtung und die Vorteile und Modifikationen des erfindungsgemäßen landwirtschaftlichen Geräts verwiesen.

Erfindungsgemäß wird der Abstand der jeweiligen Sensoren zu dem jeweiligen Bezugsobjekt aus den Sensordaten der jeweiligen Sensoren, insbesondere durch eine Auswerteeinrichtung des landwirtschaftlichen Geräts, ermittelt und es werden Reflexionseigenschaften des jeweiligen Bezugsobjekts aus den Sensordaten der jeweiligen Sensoren, insbesondere durch eine Auswerteeinrichtung des landwirtschaftlichen Geräts, ermittelt. Alternativ oder zusätzlich werden die Sensordaten des einen oder der mehreren Sensoren auf einem internen Speicher des landwirtschaftlichen Geräts gespeichert und/oder die Sensordaten des einen oder der mehreren Sensoren werden an ein externes Gerät versendet.

Außerdem umfasst das erfindungsgemäße Verfahren vorzugsweise das Ermitteln der Chlorophyllaktivität und/oder des Chlorophyllzustands des Bezugsobjekts auf Grundlage der ermittelten Reflexionseigenschaften und/oder das Bestimmen des Zustands, insbesondere des Vitalitätszustands, des Bezugsobjekts auf Grundlage der ermittelten Reflexionseigenschaften. Insbesondere umfasst das Verfahren das Ermitteln der Höhe und/oder anderer geometrischer Eigenschaften des Bezugsobjekts aus den Sensordaten der jeweiligen Sensoren. Das Ermitteln der Höhe des Bezugsobjekts kann über mehrere Abstandserfassungsvorgänge erfolgen, wobei der Abstand zu dem in Frage stehenden Bezugsobjekt mit dem Abstand zu einem als Ackerboden identifizieren Bezugsobjekt verglichen wird. Das Ermitteln der Chlorophyllaktivität und/oder des Chlorophyllzustands und/oder das Bestimmen des Zustands, insbesondere des Vitalitätszustands, des Bezugsobjekts erfolgt insbesondere durch die Auswerteeinrichtung des landwirtschaftlichen Geräts und/oder auf Grundlage von einer oder mehreren Funktionen und/oder einer oder mehreren Kalibrierkurven. Wenn das Bezugsobjekt eine Pflanze ist, betrifft die Höhe des Bezugsobjekts die Pflanzenhöhe. Ferner kann das Verfahren das Ermitteln der Dichte eines Pflanzenbestandes aus den Sensordaten der jeweiligen Sensoren umfassen. Außerdem ist ein erfindungsgemäßes Verfahren bevorzugt, bei welchem der eine oder die mehreren Sensoren jeweils eine oder mehrere elektromagnetische Wellen aussenden und/oder der eine oder die mehreren Sensoren die jeweilige Laufzeit der einen oder der mehreren an dem Bezugsobjekt reflektierten elektromagnetischen Wellen erfassen. Alternativ oder zusätzlich erfolgt ein Erfassen der Intensität der einen oder der mehreren an dem Bezugsobjekt reflektierten elektromagnetischen Wellen. Darüber hinaus kann ein Aussenden eines einen Impuls aufweisenden und/oder in der Intensität schwankenden Sendesignals durch die eine oder die mehreren Sendeeinheiten, insbesondere LED-Sendeeinheiten oder Laser-Sendeeinheiten, der jeweiligen Sensoren erfolgen. Ferner kann ein Empfangen jeweils eines einen Impuls aufweisenden und/oder in der Intensität schwankenden Empfangssignals durch eine Empfängereinheit des einen oder der mehreren Sensoren erfolgen. Vorzugsweise sind die mehreren Sendeeinheiten nebeneinander angeordnet, sodass eine mehrdimensionale, insbesondere zweidimensionale oder dreidimensionale Abstandserfassung über mehrere Einzelmessungen erfolgen kann. Das Verfahren umfasst vorzugsweise das Zuordnen der ausgesendeten und empfangenen Impulse oder Signale zueinander. Ferner kann das Verfahren das Ermitteln der Laufzeit der reflektierten elektromagnetischen Wellen aus dem Sendezeitpunkt und dem Empfangszeitpunkt einander zugeordneter Impulse oder Signale umfassen. Ferner kann das Verfahren das Ermitteln der Intensitätsänderung einander zugeordneter Impulse oder Signale umfassen.

Das Verfahren wird ferner dadurch vorteilhaft weitergebildet, dass die eine oder die mehreren ausgesendeten elektromagnetischen Wellen Wellenlängen aus dem nahen Infrarotbereich umfassen. Die eine oder die mehreren ausgesendeten elektromagnetischen Wellen weisen vorzugsweise eine Wellenlänge in dem Bereich von 700 nm bis 1,3 µm, insbesondere eine Wellenlänge im Bereich von 780 nm bis 900 nm, auf.

Darüber hinaus ist ein erfindungsgemäßes Verfahren bevorzugt, bei welchem das landwirtschaftliche Gerät ein Spritzgestänge aufweist, an welchem mehrere Ausbringelemente zum Ausbringen des als Spritzflüssigkeit ausgebildeten Materials angeordnet sind und der eine oder die mehreren Sensoren an dem Spritzgestänge angeordnet sind. Insbesondere umfasst das Verfahren das Ausführen einer Höhenführung an dem Spritzgestänge auf Grundlage der Sensordaten des einen oder der mehreren Sensoren und/oder das Ausführen einer Schwingungsreduktion an dem Spritzgestänge auf Grundlage der Sensordaten des einen oder der mehreren Sensoren. Erfindungsgemäß umfasst das Verfahren das Steuern der Ausbringmenge auf Grundlage der Sensordaten des einen oder der mehreren Sensoren. Alternativ oder zusätzlich umfasst das erfindungsgemäße Verfahren das Erstellen einer Applikationskarte auf Grundlage der Sensordaten des einen oder der mehreren Sensoren durch das landwirtschaftliche Gerät und/oder ein externes Gerät. Das landwirtschaftliche Gerät kann eine Feldspritze, insbesondere eine Anbauspritze, eine Ausbauspritze, eine Anhängespritze oder eine selbstfahrende Spritze sein. Die Ausbringmenge wird vorzugsweise mittels Pulsweitenmodulation oder Pulsweitenfrequenzmodulation an den Ausbringelementen oder den Ausbringelementen vorgeschalteten Ventileinheiten gesteuert. Das Verfahren kann das Versenden der Sensordaten des einen oder der mehreren Sensoren an ein externes Gerät umfassen.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Geräts in einer perspektivischen Darstellung;
- Fig. 2: ein Ausführungsbeispiel der erfindungsgemäßen Steuerungseinrichtung in einer schematischen Darstellung;
- Fig. 3: ein Ausführungsbeispiel des erfindungsgemäßen landwirtschaftlichen Geräts in einer Rückansicht; und
- Fig. 4: eine Auswertung von elektromagnetischen Wellen gemäß dem erfindungsgemäßen Verfahren.

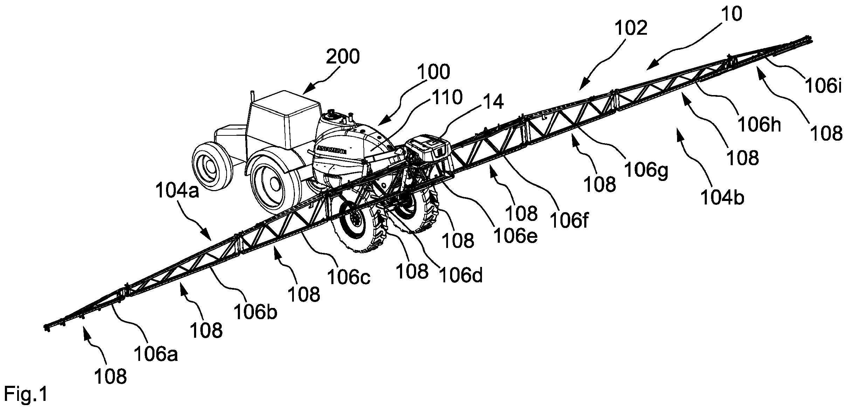

Die Fig. 1 zeigt ein als Anhängespritze ausgebildetes landwirtschaftliches Gerät 100, mittels welchem Düngemittel, nämlich Flüssigdünger, und flüssiges Pflanzenschutzmittel ausgebracht werden kann. Das landwirtschaftliche Gerät 100 wird von einem als Traktor ausgebildeten Zugfahrzeug 200 gezogen.

Das landwirtschaftliche Gerät 100 weist neben einem Vorratstank 110 ein Spritzgestänge 102 auf, welches einen linken Ausleger 104a und einen rechten Ausleger 104b umfasst. Das Spritzgesänge 102 ist Gestängeabschnitte 106a-106i unterteilt, wobei benachbarte Gestängeabschnitte 106a-106i eines Auslegers 104a, 104b zueinander verschwenkt werden können.

An dem Spritzgestänge 102 sind mehrere als Spritzdüsen ausgebildete Ausbringelemente 108 zum Ausbringen eines als Spritzflüssigkeit ausgebildeten Materials angeordnet.

Das landwirtschaftliche Gerät 100 weist außerdem eine Steuerungseinrichtung 10 zur Steuerung des Ausbringvorgangs auf. Die Steuerungseinrichtung 10 umfasst mehrere Sensoren 12, 12a-12f (in der Fig. 1 nicht dargestellt) und eine Auswerteeinrichtung 14. Die Sensoren 12, 12a-12f sind über die gesamte Arbeitsbreite des landwirtschaftlichen Geräts 100 an dem Spritzgestänge 104 angeordnet und jeweils dazu eingerichtet, Sensordaten zum Erfassen eines Abstands zu einem Bezugsobjekt B1, B2 und zum Erfassen von Reflexionseigenschaften des Bezugsobjekts B1, B2 bereitzustellen. Die Auswerteeinrichtung 14 ist dazu eingerichtet, aus den Sensordaten der jeweiligen Sensoren 12, 12a-12f den Abstand der jeweiligen Sensoren 12, 12a-12f zu dem jeweiligen Bezugsobjekt B1, B2 und die Reflexionseigenschaften des jeweiligen Bezugsobjekts B1, B2 zu ermitteln. Die Bezugsobjekte B1, B2 für die jeweiligen Sensoren 12, 12a-12f können beispielsweise Pflanzen oder der Ackerboden sein. Ferner kann die Höhe eines als Pflanze identifizierten Bezugsobjekts B1 aus den Sensordaten der jeweiligen Sensoren 12, 12a-12f ermittelt werden.

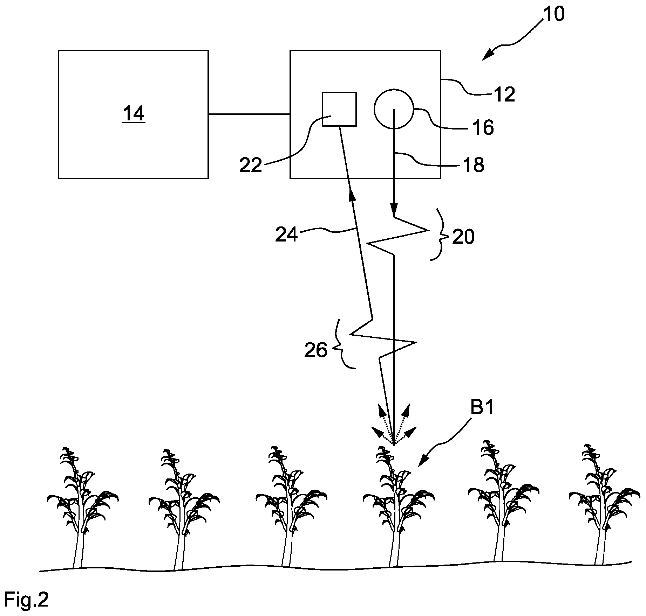

Die Fig. 2 zeigt eine entsprechende Steuerungseinrichtung 10 mit einem Sensor 12, welcher signalleitend mit einer Auswerteeinrichtung 14 verbunden ist. Der Sensor 12 ist dazu eingerichtet, elektromagnetische Wellen 18 auszusenden und die Laufzeit 32 und die Intensität der an dem als Pflanze ausgebildeten Bezugsobjekt B1 reflektierten elektromagnetischen Wellen 24 zu erfassen. Hierzu weist der Sensor 12 eine Sendeeinheit 16, nämlich eine LED-Sendeeinheit, auf, welche dazu eingerichtet ist, ein einen Impuls 20 aufweisendes Sendesignal auszusenden. Außerdem umfasst der Sensor 12 eine Empfängereinheit 22, welche dazu eingerichtet ist, ein einen Impuls 26 aufweisendes Empfangssignal zu empfangen. Der Sensor 12 oder die Auswerteeinrichtung 14 umfasst außerdem eine Messeinheit, welche dazu eingerichtet ist, den ausgesendeten und empfangenen Impuls 20, 26 einander zuzuordnen und die Impulsänderung zu erfassen sowie aus dem Sendezeitpunkt 28 und dem Empfangszeitpunkt 30 dieser Impulse 20, 26 die Laufzeit 32 der reflektierten elektromagnetischen Wellen 18, 24 zu ermitteln. Die ausgesendeten elektromagnetischen Wellen 18 umfassen dabei Lichtwellen aus dem nahen Infrarotbereich mit einer Wellenlänge in dem Bereich von 0,7µm bis 1,3 µm. Entsprechend ist die Auswerteeinrichtung 14 dazu eingerichtet, reflektierte elektromagnetische Wellen 24 mit einer Wellenlänge in dem Bereich von 0,7µm bis 1,3 µm zur Ermittlung der Reflexionseigenschaften des Bezugsobjekts B1 auszuwerten.

Die Auswerteeinrichtung 14 ist dazu eingerichtet, auf Grundlage der ermittelten Reflexionseigenschaften unter Verwendung von Funktionen und/oder Kalibrierkurven den Chlorophyllzustand des als Pflanze ausgebildeten Bezugsobjekts B1 zu ermitteln und den Vitalitätszustand des als Pflanze ausgebildeten Bezugsobjekts B1 zu bestimmen. Bei der Bestimmung des Vitalitätszustands des als Pflanze ausgebildeten Bezugsobjekts B1 wird außerdem die zuvor ermittelte Pflanzenhöhe berücksichtigt.

Darüber hinaus ist die Auswerteeinrichtung 14 dazu eingerichtet, die Sensordaten des Sensors 12 auf einem internen Speicher zu speichern und an ein externes Gerät zur weiteres Auswertung zu versenden.

Nicht dargestellt ist, dass der Sensor 12 auch mehrere nebeneinander angeordnete Sendeeinheiten 16 umfassen kann, sodass eine zweidimensionale Abstandserfassung über mehrere Einzelmessungen erfolgen kann. Dabei werden elektromagnetische Wellen von den einzelnen Sendeeinheiten 16 des Sensors 12 in unterschiedliche Richtungen ausgesendet.

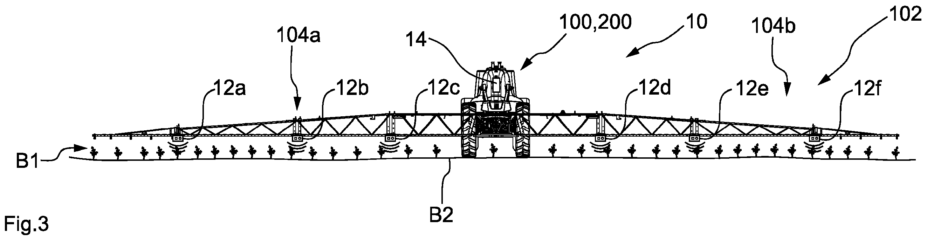

Die Fig. 3 zeigt ein als Feldspritze ausgebildetes landwirtschaftliches Gerät 100 mit einer Steuerungseinrichtung 10. Die Steuerungseinrichtung 10 umfasst mehrere Sensoren 12a-12f und eine signalleitend mit den Sensoren 12a-12f verbundene Auswerteeinrichtung 14. Die Sensoren 12a-12f sind an einem Spritzgestänge 102 angeordnet und jeweils dazu eingerichtet, Sensordaten zum Erfassen von Reflexionseigenschaften von als Pflanzen ausgebildeten Bezugsobjekten B1 und zum Erfassen des Abstands zu dem als Ackerboden ausgebildeten Bezugsobjekt B2 bereitzustellen.

Die Steuerungseinrichtung 10 ist dazu eingerichtet, die Sensordaten der Sensoren 12a-12f zur Höhenführung des Spritzgestänges 102, zur Schwingungsreduktion an dem Spritzgestänge 102 sowie zur Steuerung der Ausbringmenge zu verwenden. Die Ausbringmenge wird dabei mittels Pulsweitenfrequenzmodulation an den als Spritzdüsen ausgebildeten Ausbringelementen 108 gesteuert.

Die Sensordaten der Sensoren 12a-12f werden außerdem zur Erstellung einer Applikationskarte verwendet. Hierzu werden die Sensordaten der Sensoren 12a-12f zur Erstellung der Applikationskarte an ein externes Gerät versendet.

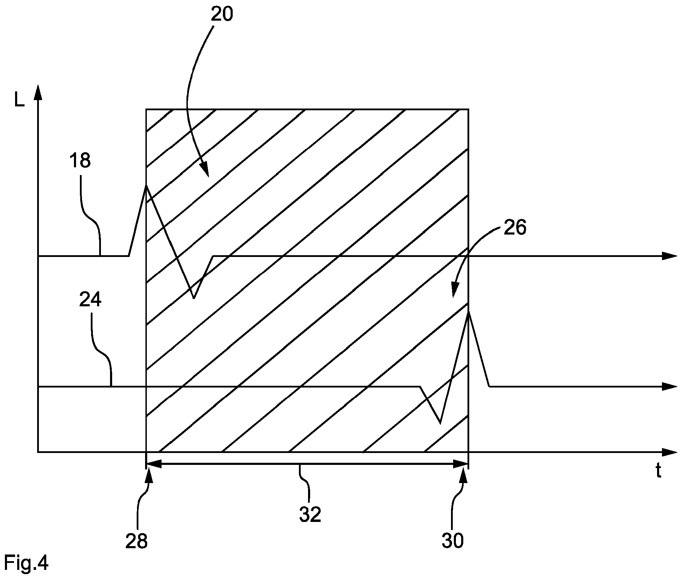

Die Fig. 4 zeigt, auf welche Weise der Abstand eines Sensors 12 zu einem Bezugsobjekt B1, B2 und die Reflexionseigenschaften des Bezugsobjekts B1, B2 aus den Sensordaten des Sensors 12 ermittelt werden können.

Zunächst werden durch den Sensor 12 elektromagnetische Wellen 18 ausgesendet. Das ausgesendete Signal wird dann durch Bezugsobjekt B1, B2 reflektiert. Mittels des Sensors 12 kann dann die Laufzeit 32 und die Intensität der an dem Bezugsobjekt B1, B2 reflektierten elektromagnetischen Wellen 24 erfasst werden.

Hierzu umfasst das ausgesendete Signal 18 einen Impuls 20. Entsprechend weist das empfangene Signal 24 ebenfalls einen Impuls 26 auf. Die ausgesendeten und empfangenen Impulse 20, 26 können einander zugeordnet werden, sodass aus dem Sendezeitpunkt 28 und dem Empfangszeitpunkt 30 einander zugeordneter Impulse 20, 26 die Laufzeit 32 ermittelt werden kann. Über die Ausbreitungsgeschwindigkeit von elektromagnetischen Wellen kann auf diese Weise der Abstand zu dem Bezugsobjekt B1, B2 ermittelt werden. Außerdem können über einen Vergleich des ausgesendeten und empfangenen Impulses 20, 26, insbesondere über deren Intensität, die Reflexionseigenschaften des Bezugsobjekts B1, B2 ermittelt werden.

Auf Grundlage der ermittelten Reflexionseigenschaften kann dann die Chlorophyllaktivität und/oder der Vitalitätszustand des Bezugsobjekts B1, B2 ermittelt werden.

### Bezugszeichenliste

- 10: Steuerungseinrichtung
- 12, 12a-12f: Sensoren
- 14: Auswerteeinrichtung
- 16: Sendeeinheit
- 18: elektromagnetische Welle
- 20: Impuls
- 22: Empfängereinheit
- 24: elektromagnetische Welle
- 26: Impuls
- 28: Sendezeitpunkt
- 30: Empfangszeitpunkt
- 32: Laufzeit

- 100: landwirtschaftliches Gerät
- 102: Spritzgestänge
- 104a, 104b: Ausleger
- 106a-106i: Gestängeabschnitte
- 108: Ausbringelemente
- 110: Vorratstank

- 200: Zugfahrzeug

- B1, B2: Bezugsobjekte

## Patentansprüche

1. Landwirtschaftliches Gerät (100) zum Ausbringen von Material, wie Düngemittel, Pflanzenschutzmittel oder Saatgut, mit einer Steuerungseinrichtung (10) zur Steuerung des Ausbringvorgangs, wobei die Steuerungseinrichtung (10) ausgebildet ist mit
- einem oder mehreren Sensoren (12, 12a-12f), welche jeweils dazu eingerichtet sind, Sensordaten zum Erfassen eines Abstands zu einem Bezugsobjekt (B1, B2) bereitzustellen, wobei
der eine oder die mehreren Sensoren (12, 12a-12f) jeweils dazu eingerichtet sind, Sensordaten zum Erfassen von Reflexionseigenschaften des Bezugsobjekts (B1, B2) bereitzustellen, wobei der eine oder die mehreren Sensoren (12, 12a-12f) jeweils dazu eingerichtet sind, eine oder mehrere elektromagnetische Welle (18) auszusenden und die Laufzeit (32) und die Intensität der einen oder der mehreren an dem Bezugsobjekt (B1, B2) reflektierten elektromagnetischen Wellen (24) zu erfassen
**gekennzeichnet durch** eine Auswerteeinrichtung (14), welche signalleitend mit dem einen oder den mehreren Sensoren (12, 12a-12f) verbunden und dazu eingerichtet ist, aus den Sensordaten der jeweiligen Sensoren (12, 12a-12f) den Abstand der jeweiligen Sensoren (12, 12a-12f) zu dem jeweiligen Bezugsobjekt (B1, B2) und die Reflexionseigenschaften des jeweiligen Bezugsobjekts (B1, B2) zu ermitteln, wobei über die Laufzeit der einen oder der mehreren an dem Bezugsobjekt reflektierten elektromagnetischen Wellen unter Berücksichtigung der Ausbreitungsgeschwindigkeit der elektromagnetischen Wellen der Abstand zu dem Bezugsobjekt bestimmt wird und über die Intensität der einen oder mehreren an dem Bezugsobjekt reflektierten elektromagnetischen Wellen die Reflexionseigenschaften des Bezugsobjekts erfasst werden, wobei die Auswerteeinrichtung (14) dazu eingerichtet ist, auf Grundlage der ermittelten Reflexionseigenschaften den Vitalitätszustand des Bezugsobjekts (B1, B2) zu bestimmen, wobei die Sensordaten des einen oder der mehreren Sensoren zur Steuerung der Ausbringmenge verwendet werden, wobei die Menge lokal gesteigert wird, wenn eine Pflanze mit einem nicht-optimalen Vitalitätszustand erfasst wird.

2. Steuerungseinrichtung (10) nach Anspruch 1,
**dadurch gekennzeichnet, dass** die Auswerteeinrichtung (14) dazu eingerichtet ist, auf Grundlage der ermittelten Reflexionseigenschaften die Chlorophyllaktivität und/oder den Chlorophyllzustand des Bezugsobjekts (B1, B2) zu ermitteln.

3. Steuerungseinrichtung (10) nach einem der vorstehenden Ansprüche, **dadurch gekennzeichnet, dass** der eine die mehreren Sensoren (12, 12a-12f) jeweils eine oder mehrere Sendeeinheiten (16), insbesondere LED-Sendeeinheiten und/oder Laser-Sendeeinheiten, umfassen, welche jeweils dazu eingerichtet sind, ein einen Impuls (20) aufweisendes und/oder in der Intensität schwankendes Sendesignal auszusenden.

4. Steuerungseinrichtung (10) nach einem der vorstehenden Ansprüche, **dadurch gekennzeichnet, dass** die eine oder die mehreren ausgesendeten elektromagnetischen Wellen (18) Lichtwellen aus dem nahen Infrarotbereich umfassen.

5. Landwirtschaftliches Gerät (100) nach einem der vorstehenden Ansprüche, **gekennzeichnet durch** ein Spritzgestänge (102), an welchem mehrere Ausbringelemente (108) zum Ausbringen des als Spritzflüssigkeit ausgebildeten Materials angeordnet sind, wobei der eine oder die mehreren Sensoren (12, 12a-12f) der Steuerungseinrichtung (10) ebenfalls an dem Spritzgestänge (102) angeordnet sind.

6. Landwirtschaftliches Gerät (100) nach Anspruch 5,
**dadurch gekennzeichnet, dass** die Steuerungseinrichtung (10) dazu eingerichtet ist, die Sensordaten des einen oder der mehreren Sensoren (12, 12a-12f) zur Höhenführung des Spritzgestänges (102) und/oder zur Schwingungsreduktion an dem Spritzgestänge (102) zu verwenden.

7. Landwirtschaftliches Gerät (100) nach einem der vorstehenden Ansprüche, **dadurch gekennzeichnet, dass** die Steuerungseinrichtung (10) dazu eingerichtet ist, die Ausbringmenge mittels Pulsweitenmodulation oder Pulsweitenfrequenzmodulation an den Ausbringelementen (108) oder den Ausbringelementen (108) vorgeschalteten Ventileinheiten zu steuern.

8. Landwirtschaftliches Gerät (100) nach einem der vorstehenden Ansprüche, **dadurch gekennzeichnet, dass** die Steuerungseinrichtung (10) dazu eingerichtet ist, die Sensordaten des einen oder der mehreren Sensoren (12, 12a-12f) zur Erstellung einer Applikationskarte zu verwenden und/oder zur Erstellung einer Applikationskarte an ein externes Gerät zu versenden.

9. Verfahren zum Ausbringen von Material, wie Düngemittel, Pflanzenschutzmittel oder Saatgut, wobei das Verfahren vorzugsweise mit einem landwirtschaftlichen Gerät (100) nach einem der Ansprüche 8 bis 12 ausgeführt wird, mit den Schritten:
- Aussenden jeweils einer oder mehrerer elektromagnetischer Wellen (18) durch einen oder die mehrere Sensoren (12, 12a-12f),
- Erzeugen von Sensordaten mit dem einen oder den mehreren Sensoren (12, 12a-12f) eines landwirtschaftlichen Geräts (100) zum Erfassen eines Abstands der jeweiligen Sensoren (12, 12a-12f) zu einem Bezugsobjekt (B1, B2),
- Erzeugen von Sensordaten mit dem einen oder den mehreren Sensoren (12, 12a-12f) zum Erfassen der Reflexionseigenschaften des Bezugsobjekts (B1, B2),
- Erfassen der jeweiligen Laufzeit (32) der einen oder der mehreren an dem Bezugsobjekt (B1, B2) reflektierten elektromagnetischen Wellen (24) durch den einen oder die mehreren Sensoren (12, 12a-12f),
- Erfassen der Intensität der einen oder der mehreren an dem Bezugsobjekt (B1, B2) reflektierten elektromagnetischen Wellen (24) **gekennzeichnet durch** die Schritte:
- Ermitteln des Abstands der jeweiligen Sensoren (12, 12a-12f) zu dem jeweiligen Bezugsobjekt (B1, B2) aus den Sensordaten der jeweiligen Sensoren (12, 12a-12f) über die Laufzeit der einen oder der mehreren an dem Bezugsobjekt reflektierten elektromagnetischen Wellen unter Berücksichtigung der Ausbreitungsgeschwindigkeit der elektromagnetischen Wellen, insbesondere durch eine Auswerteeinrichtung (14) des landwirtschaftlichen Geräts (100);
- Ermitteln der Reflexionseigenschaften des jeweiligen Bezugsobjekts (B1, B2) aus den Sensordaten der jeweiligen Sensoren (12, 12a-12f) über die Intensität der einen oder mehreren an dem Bezugsobjekt reflektierten elektromagnetischen Wellen, insbesondere durch eine Auswerteeinrichtung (14) des landwirtschaftlichen Geräts (100);
- Bestimmen des Vitalitätszustands des Bezugsobjekts (B1, B2) auf Grundlage der ermittelten Reflexionseigenschaften,
- Steuern der Ausbringmenge auf Grundlage der Sensordaten des einen oder der mehreren Sensoren (12, 12a-12f); wobei die Menge lokal gesteigert wird, wenn eine Pflanze mit einem nicht-optimalen Vitalitätszustand erfasst wird.

10. Verfahren nach Anspruch 9,
**gekennzeichnet durch** zumindest einen der folgenden Schritte:
- Speichern der Sensordaten des einen oder der mehreren Sensoren (12, 12a-12f) auf einem internen Speicher des landwirtschaftlichen Geräts (100);
- Senden der Sensordaten des einen oder der mehreren Sensoren (12, 12a-12f) an ein externes Gerät.

11. Verfahren nach Anspruch 10,
**gekennzeichnet durch** zumindest einen der folgenden Schritte:
- Ermitteln der Chlorophyllaktivität und/oder des Chlorophyllzustands des Bezugsobjekts (B1, B2) auf Grundlage der ermittelten Reflexionseigenschaften,
- Bestimmen des Zustands, insbesondere des Vitalitätszustands, des Bezugsobjekts (B1, B2) auf Grundlage der ermittelten Reflexionseigenschaften.

12. Verfahren nach einem der Ansprüche 9 bis 11,
**gekennzeichnet durch** zumindest einen der folgenden Schritte:
- Aussenden eines einen Impuls (20) aufweisenden und/oder in der Intensität schwankenden Sendesignals durch eine oder mehreren Sendeeinheiten (16), insbesondere LED-Sendeeinheiten oder Laser-Sendeeinheiten, der jeweiligen Sensoren (12, 12a-12f);
- Empfangen jeweils eines einen Impuls (26) aufweisenden und/oder in der Intensität schwankenden Empfangssignals durch eine Empfängereinheit (22) des einen oder der mehreren Sensoren (12, 12a-12f).

13. Verfahren nach einem der Ansprüche 9 bis 12,
**dadurch gekennzeichnet, dass** die eine oder die mehreren ausgesendeten elektromagnetischen Welle (18) Wellenlängen aus dem nahen Infrarotbereich umfassen.

14. Verfahren nach einem der Ansprüche 9 bis 13,
wobei das landwirtschaftliche Gerät (100) ein Spritzgestänge (102) aufweist, an welchem mehrere Ausbringelemente (108) zum Ausbringen des als Spritzflüssigkeit ausgebildeten Materials angeordnet sind und der eine oder die mehreren Sensoren (12, 12a-12f) an dem Spritzgestänge (102) angeordnet sind,
**gekennzeichnet durch** zumindest einen der folgenden Schritte:
- Ausführen einer Höhenführung an dem Spritzgestänge (102) auf Grundlage der Sensordaten des einen oder der mehreren Sensoren (12, 12a-12f);
- Ausführen einer Schwingungsreduktion an dem Spritzgestänge (102) auf Grundlage der Sensordaten des einen oder der mehreren Sensoren (12, 12a-12f);
- Erstellen einer Applikationskarte auf Grundlage der Sensordaten des einen oder der mehreren Sensoren (12, 12a-12f) durch das landwirtschaftliche Gerät (100) und/oder ein externes Gerät.

## Claims

1. An agricultural machine (100) for spreading material, such as fertilizer, plant protectant or seed, comprising a control device (10) for controlling the spreading process, the control device (10) being designed to have
- one or more sensors (12, 12a-12f) which are each configured to provide sensor data for detecting a distance from a reference object (B1, B2),
the one or more sensors (12, 12a-12f) each being configured to provide sensor data for detecting reflection properties of the reference object (B1, B2), the one or more sensors (12, 12a-12f) each being configured to emit one or more electromagnetic waves (18) and to detect the transit time (32) and the intensity of the one or more electromagnetic waves (24) reflected on the reference object (B1, B2),
**characterized by** an evaluation device (14) which is connected in a signal-conducting manner to the one or more sensors (12, 12a-12f) and is configured to ascertain, from the sensor data from the respective sensors (12, 12a-12f), the distance of the respective sensors (12, 12a-12f) from the particular reference object (B1, B2) and the reflection properties of the particular reference object (B1, B2), the distance from the reference object being determined via the transit time of the one or more electromagnetic waves reflected on the reference object, taking into account the propagation speed of the electromagnetic waves, and the reflection properties of the reference object being detected via the intensity of the one or more electromagnetic waves reflected on the reference object, the evaluation device (14) being configured to determine the vitality state of the reference object (B1, B2) on the basis of the ascertained reflection properties, the sensor data of the one or more sensors being used to control the spreading amount, the amount being locally increased when a plant having a non-optimal vitality state is detected.

2. The control device (10) according to claim 1,
**characterized in that** the evaluation device (14) is configured to determine the chlorophyll activity and/or the chlorophyll state of the reference object (B1, B2) on the basis of the ascertained reflection properties.

3. The control device (10) according to either of the preceding claims,
**characterized in that** the one or more sensors (12, 12a-12f) each comprises one or more transmitting units (16), in particular LED transmitting units and/or laser transmitting units, which are each configured to transmit a transmission signal which has a pulse (20) and/or fluctuates in intensity.

4. The control device (10) according to any of the preceding claims,
**characterized in that** the one or more emitted electromagnetic waves (18) comprise light waves from the near-infrared range.

5. An agricultural machine (100) according to any of the preceding claims,
**characterized by** a spray boom (102) on which a plurality of spreading elements (108) for spreading the material formed as a spray liquid are arranged, the one or more sensors (12, 12a-12f) of the control device (10) likewise being arranged on the spray boom (102).

6. The agricultural machine (100) according to claim 5,
**characterized in that** the control device (10) is configured to use the sensor data from the one or more sensors (12, 12a-12f) for vertical guidance of the spray boom (102) and/or for vibration reduction on the spray boom (102).

7. The agricultural machine (100) according to any of the preceding claims,
**characterized in that** the control device (10) is configured to control the spreading amount by means of pulse width modulation or pulse width frequency modulation on the spreading elements (108) or valve units upstream of the spreading elements (108).

8. The agricultural machine (100) according to any of the preceding claims,
**characterized in that** the control device (10) is configured to use the sensor data from the one or more sensors (12, 12a-12f) to create an application map and/or to send said data to an external device in order to create an application map.

9. A method for spreading material, such as fertilizer, plant protectant or seed, the method preferably being carried out using an agricultural machine (100) according to any of claims 8 to 12, the method comprising the steps of:
- emitting one or more electromagnetic waves (18) by means of one or more sensors (12, 12a-12f),
- generating sensor data, using the one or more sensors (12, 12a-12f) of an agricultural machine (100), for detecting a distance of the respective sensors (12, 12a-12f) from a reference object (B1, B2),
- generating sensor data, using the one or more sensors (12, 12a-12f), for detecting the reflection properties of the reference object (B1, B2),
- detecting the particular transit time (32) of the one or more electromagnetic waves (24) reflected on the reference object (B1, B2), by means of the one or more sensors (12, 12a-12f),
- detecting the intensity of the one or more electromagnetic waves (24) reflected on the reference object (B1, B2),
**characterized by** the following steps:
- ascertaining the distance of the respective sensors (12, 12a-12f) from the particular reference object (B1, B2) from the sensor data from the respective sensors (12, 12a-12f) over the transit time of the one or more electromagnetic waves reflected on the reference object, taking into account the propagation speed of the electromagnetic waves, in particular by means of an evaluation device (14) of the agricultural machine (100);
- ascertaining the reflection properties of the particular reference object (B1, B2) from the sensor data from the respective sensors (12, 12a-12f) via the intensity of the one or more electromagnetic waves reflected on the reference object, in particular by means of an evaluation device (14) of the agricultural machine (100);
- determining the vitality state of the reference object (B1, B2) on the basis of the ascertained reflection properties,
- controlling the spreading amount on the basis of the sensor data from the one or more sensors (12, 12a-12f); the amount being locally increased when a plant having a non-optimal vitality state is detected.

10. The method according to claim 9,
**characterized by** at least one of the following steps:
- storing the sensor data from the one or more sensors (12, 12a-12f) on an internal memory of the agricultural machine (100);
- transmitting the sensor data from the one or more sensors (12, 12a-12f) to an external device.

11. The method according to claim 10,
**characterized by** at least one of the following steps:
- ascertaining the chlorophyll activity and/or the chlorophyll state of the reference object (B1, b2) on the basis of the ascertained reflection properties,
- determining the state, in particular the vitality state, of the reference object (B1, B2) on the basis of the ascertained reflection properties.

12. The method according to any of claims 9 to 11,
**characterized by** at least one of the following steps:
- emitting a transmission signal which has a pulse (20) and/or fluctuates in intensity, by means of one or more transmitting units (16), in particular LED transmitting units or laser transmitting units, of the respective sensors (12, 12a-12f);
- receiving a received signal which has a pulse (26) and/or fluctuates in intensity, by means of a receiver unit (22) of the one or more sensors (12, 12a-12f).

13. The method according to any of claims 9 to 12,
**characterized in that** the one or more emitted electromagnetic waves (18) comprise wavelengths from the near-infrared range.

14. The method according to any of claims 9 to 13,
the agricultural machine (100) having a spray boom (102) on which a plurality of dispensing elements (108) for dispensing the material formed as a spraying liquid are arranged, and the one or more sensors (12, 12a-12f) being arranged on the spray boom (102),
**characterized by** at least one of the following steps:
- performing vertical guidance on the spray boom (102) on the basis of the sensor data from the one or more sensors (12, 12a-12f);
- performing vibration reduction on the spray boom (102) on the basis of the sensor data from the one or more sensors (12, 12a-12f);
- creating an application map on the basis of the sensor data from the one or more sensors (12, 12a-12f), by means of the agricultural machine (100) and/or an external device.

## Revendications

1. Appareil agricole (100) permettant l'épandage de matière, telle que de l'engrais, des produits phytosanitaires ou des semences, comportant un dispositif de commande (10) pour la commande du procédé d'épandage, le dispositif de commande (10) étant réalisé en comportant
- un ou plusieurs capteurs (12, 12a-12f), lesquels sont respectivement configurés pour fournir des données de capteur pour la détection d'une distance par rapport à un objet de référence (B1, B2),
le ou les capteurs (12, 12a-12f) étant respectivement configurés pour fournir des données de capteur pour la détection de propriétés de réflexion de l'objet de référence (B1, B2), le ou les capteurs (12, 12a-12f) étant respectivement configurés pour émettre une ou plusieurs ondes électromagnétiques (18) et pour détecter la durée de parcours (32) et l'intensité de la ou des ondes électromagnétiques (24) réfléchies sur l'objet de référence (B1, B2)
**caractérisé par** un dispositif d'évaluation (14), lequel est connecté d'une manière conductrice de signaux au ou aux capteurs (12, 12a-12f) et est configuré pour déterminer, à partir des données de capteur des capteurs (12, 12a-12f) respectifs, la distance des capteurs (12, 12a-12f) respectifs par rapport à l'objet de référence (B1, B2) respectif et les propriétés de réflexion de l'objet de référence (B1, B2) respectif, la distance par rapport à l'objet de référence étant définie par l'intermédiaire de la durée de parcours de la ou des ondes électromagnétiques réfléchies sur l'objet de référence en tenant compte de la vitesse de propagation des ondes électromagnétiques et les propriétés de réflexion de l'objet de référence étant détectées par l'intermédiaire de l'intensité de la ou des ondes électromagnétiques réfléchies sur l'objet de référence, le dispositif d'évaluation (14) étant configuré pour définir l'état de vitalité de l'objet de référence (B1, B2) sur la base des propriétés de réflexion déterminées, les données de capteur du ou des capteurs étant utilisées pour la commande de la quantité d'épandage, la quantité étant augmentée localement lorsqu'une plante comportant un état de vitalité non optimal est détectée.

2. Dispositif de commande (10) selon la revendication 1,
**caractérisé en ce que** le dispositif d'évaluation (14) est configuré pour déterminer, sur la base des propriétés de réflexion déterminées, l'activité chlorophyllienne et/ou l'état chlorophyllien de l'objet de référence (B1, B2).

3. Dispositif de commande (10) selon l'une des revendications précédentes, **caractérisé en ce que** le ou les capteurs (12, 12a-12f) comprennent respectivement une ou plusieurs unités d'émission (16), en particulier des unités d'émission à DEL et/ou des unités d'émission à laser, lesquelles sont respectivement configurées pour émettre un signal d'émission présentant une impulsion (20) et/ou variant en intensité.

4. Dispositif de commande (10) selon l'une des revendications précédentes, **caractérisé en ce que** la ou les ondes électromagnétiques (18) émises comprennent des ondes lumineuses de la plage du proche infrarouge.

5. Appareil agricole (100) selon l'une des revendications précédentes, **caractérisé par** une rampe de pulvérisation (102), sur laquelle sont disposés plusieurs éléments d'épandage (108) permettant l'épandage de la matière réalisée sous forme de liquide de pulvérisation, le ou les capteurs (12, 12a-12f) du dispositif de commande (10) étant également disposés sur la rampe de pulvérisation (102).

6. Appareil agricole (100) selon la revendication 5,
**caractérisé en ce que** le dispositif de commande (10) est configuré pour utiliser les données de capteur du ou des capteurs (12, 12a-12f) pour le guidage en hauteur de la rampe de pulvérisation (102) et/ou pour la réduction d'oscillations au niveau de la rampe de pulvérisation (102).

7. Appareil agricole (100) selon l'une des revendications précédentes, **caractérisé en ce que** le dispositif de commande (10) est configuré pour commander la quantité d'épandage au moyen d'une modulation de largeur d'impulsion ou d'une modulation de fréquence de largeur d'impulsion au niveau des éléments d'épandage (108) ou d'unités de soupapes montées en amont des éléments d'épandage (108).

8. Appareil agricole (100) selon l'une des revendications précédentes, **caractérisé en ce que** le dispositif de commande (10) est configuré pour utiliser les données de capteur du ou des capteurs (12, 12a-12f) pour la création d'une carte d'application et/ou pour les envoyer à un appareil externe pour la création d'une carte d'application.

9. Procédé permettant l'épandage de matière, telle que de l'engrais, des produits phytosanitaires ou des semences, le procédé étant de préférence exécuté au moyen d'un appareil agricole (100) selon l'une des revendications 8 à 12, comportant les étapes :
- d'émission de respectivement une ou plusieurs ondes électromagnétiques (18) par un capteur ou par les capteurs (12, 12a-12f),
- de génération de données de capteur au moyen du ou des capteurs (12, 12a-12f) d'un appareil agricole (100) pour la détection d'une distance des capteurs (12, 12a-12f) respectifs par rapport à un objet de référence (B1, B2),
- de génération de données de capteur au moyen du ou des capteurs (12, 12a-12f) pour la détection des propriétés de réflexion de l'objet de référence (B1, B2),
- de détection de la durée de parcours (32) respective de la ou des ondes électromagnétiques (24) réfléchies sur l'objet de référence (B1, B2) par le ou les capteurs (12, 12a-12f),
- de détection de l'intensité de la ou des ondes électromagnétiques (24) réfléchies sur l'objet de référence (B1, B2)
**caractérisé par** les étapes :
- de détermination de la distance des capteurs (12, 12a-12f) respectifs par rapport à l'objet de référence (B1, B2) respectif à partir des données de capteur des capteurs (12, 12a-12f) respectifs par l'intermédiaire de la durée de parcours de la ou des ondes électromagnétiques réfléchies sur l'objet de référence en tenant compte de la vitesse de propagation des ondes électromagnétiques, en particulier par un dispositif d'évaluation (14) de l'appareil agricole (100) ;
- de détermination des propriétés de réflexion de l'objet de référence (B1, B2) respectif à partir des données de capteur des capteurs (12, 12a-12f) respectifs par l'intermédiaire de l'intensité de la ou des ondes électromagnétiques réfléchies sur l'objet de référence, en particulier par un dispositif d'évaluation (14) de l'appareil agricole (100) ;
- de définition de l'état de vitalité de l'objet de référence (B1, B2) sur la base des propriétés de réflexion déterminées,
- de commande de la quantité d'épandage sur la base des données de capteur du ou des capteurs (12, 12a-12f) ; la quantité étant augmentée localement lorsqu'une plante comportant un état de vitalité non optimal est détectée.

10. Procédé selon la revendication 9, **caractérisé par** au moins l'une des étapes suivantes :
- mémorisation des données de capteur du ou des capteurs (12, 12a-12f) dans une mémoire interne de l'appareil agricole (100) ;
- envoi des données de capteur du ou des capteurs (12, 12a-12f) à un appareil externe.

11. Procédé selon la revendication 10, **caractérisé par** au moins l'une des étapes suivantes :
- détermination de l'activité chlorophyllienne et/ou de l'état chlorophyllien de l'objet de référence (B1, B2) sur la base des propriétés de réflexion déterminées,
- définition de l'état, en particulier de l'état de vitalité, de l'objet de référence (B1, B2) sur la base des propriétés de réflexion déterminées.

12. Procédé selon l'une des revendications 9 à 11,
**caractérisé par** au moins l'une des étapes suivantes :
- émission d'un signal d'émission présentant une impulsion (20) et/ou variant en intensité par une ou plusieurs unités d'émission (16), en particulier des unités d'émission à DEL et/ou des unités d'émission à laser, des capteurs (12, 12a-12f) respectifs ;
- réception de respectivement un signal de réception présentant une impulsion (26) et/ou variant en intensité par une unité de réception (22) du ou des capteurs (12, 12a-12f).

13. Procédé selon l'une des revendications 9 à 12,
**caractérisé en ce que** la ou les ondes électromagnétiques (18) émises comprennent des longueurs d'onde de la plage du proche infrarouge.

14. Procédé selon l'une des revendications 9 à 13,
l'appareil agricole (100) présentant une rampe de pulvérisation (102), sur laquelle sont disposés plusieurs éléments d'épandage (108) permettant l'épandage de la matière réalisée sous forme de liquide de pulvérisation, et le ou les capteurs (12, 12a-12f) étant disposés sur la rampe de pulvérisation (102),
**caractérisé par** au moins l'une des étapes suivantes :
- exécution d'un guidage en hauteur au niveau de la rampe de pulvérisation (102) sur la base des données de capteur du ou des capteurs (12, 12a-12f) ;
- exécution d'une réduction d'oscillations au niveau de la rampe de pulvérisation (102) sur la base des données de capteur du ou des capteurs (12, 12a-12f) ;
- création d'une carte d'application sur la base des données de capteur du ou des capteurs (12, 12a-12f) par l'appareil agricole (100) et/ou par un appareil externe.
